# EUROPÄISCHE PATENTSCHRIFT

(11) **EP 3 000 655 B1**
(45) Veröffentlichungstag und Bekanntmachung des Hinweises auf die Patenterteilung: **04.12.2019**
(21) Anmeldenummer: 15186787.6
(22) Anmeldetag: 25.09.2015
(51) Int. Cl.: B60P 7/08, B60P 7/15

(54) **VORRICHTUNG ZUM FESTLEGEN VON LADUNGSGEGENSTÄNDEN**
DEVICE FOR FIXING LOAD OBJECTS
DISPOSITIF D'OBJETS DE CHARGEMENT

(30) Priorität: 25.09.2014 DE 102014113930
(43) Veröffentlichungstag der Anmeldung: 30.03.2016
(73) Patentinhaber: allsafe GmbH & Co. KG, 78234 Engen (DE)
(72) Erfinder: RUH, Daniel, 78467 Konstanz (DE); WEGGLER, Josef, 78315 Radolfzell (DE)
(74) Vertreter: Patentanwälte und Rechtsanwalt Weiß, Arat & Partner mbB

(56) Entgegenhaltungen:
- EP-A1- 2 011 688
- US-A- 4 934 572
- US-A1- 2008 101 883

## Beschreibung

Die Erfindung betrifft eine Vorrichtung zum Festlegen von Ladungsgegenständen nach dem Oberbegriff des Eine solche Vorrichtung ist aus der US 2008/0101883 A1 bekannt.

### Stand der Technik

Derartige Vorrichtungen sind in vielfältiger Form und Ausführung bekannt und auf dem Markt. So zeigt beispielsweise die DE 203 05 485 U1 ein System zur Sicherung von Ladegütern auf einer Ladefläche, insbesondere von Rollbehältern auf der Ladefläche eines LKW. Dabei wird ein Beschlag an einer Schiene festgelegt. Der Beschlag ist hierbei über einen Klammerstreifen mit der Schiene verbunden, wobei der Klammerstreifen einstückig ein Profilteil der Schiene umfasst. Dies erschwert das Aufsetzen und Wegnehmen des Beschlags von der Schiene.

Des weiteren ist aus der EP 0 159 394 eine Vorrichtung zum Verzurren bzw. Festlegen von auf einer Ladefläche angeordneten Ladegütern bekannt. Auch hier ist eine Profilschiene vorgesehen, auf die ein Beschlag aufgesetzt wird. Dieser Beschlag weist wiederum einen einstückigen Schlitten auf, der in seinem Innendurchmesser einem Profilteil der Schiene so angepasst ist, dass er in einer bestimmten Gebrauchslage auf die Schiene aufgesetzt bzw. von der Schiene abgenommen werden kann. In Gebrauchslage hängt dieser Beschlag aber frei auf dem Profil der Schiene, so dass er leicht verschoben werden kann.

### Aufgabe

Aufgabe der vorliegenden Erfindung ist es, eine Vorrichtung der o.g. Art zu schaffen, bei welcher der Beschlag einfach und schnell auf die Schiene aufgesetzt und von der Schiene entfernt werden kann und seine Bewegungsfreiheit entlang der Schiene eingegrenzt ist.

### Lösung der Aufgabe

Zur Lösung der Aufgabe führen die Merkmale nach Anspruch 1.

Diese Anordnung hat den Vorteil, dass auf einfache Art und Weise der Beschlag zuerst auf das Profil bzw. einen oberen Randstreifen des Profils aufgehängt werden kann und danach, wenn gewünscht, die eigentliche Festlegung durch Bewegen des Klemmstreifens erfolgt. In diesem Sinn dürfte es auch geeignet sein, den Profilstreifen als fixen Bestandteil an dem Beschlag vorzusehen, während der Klemmstreifen bewegbar ist. Hierzu ist ein Grundkörper vorgesehen, an dem die einzelnen Funktionselemente des Beschlages angeordnet sind. Bevorzugt weist der Grundkörper auch weitere Aus- bzw. Anformungen auf, die dem Festlegen eines Ladungsgegenstandes dienen.

Eines der wesentlichen Funktionselemente ist ein Exzenterhebel, mit dem die Bewegung des Klemmstreifens bewirkt wird. Dieser Exzenterhebel ist über einen Bolzen mit dem Klemmstreifen verbunden, wobei dieser Bolzen den Grundkörper durchsetzt. D.h., der Klemmstreifen befindet sich auf der unteren Seite des Grundkörpers, der Exzenterhebel auf der oberen Seite, oder umgekehrt. Die Verbindung mit dem Bolzen erfolgt über einen Schraube mit Mutter od. dgl. Querbolzen, wobei sich bevorzugt der eigentliche Bolzen innerhalb einer Gabel des Exzenterhebels befindet.

Zum Bewegen des Bolzens weist der Exzenterhebel einen exzentrischen Bereich auf, der bewirkt, dass beim Schwenken des Exzenterhebels der Schraube mit Mutter zusammen mit dem Bolzen und dem Klemmstreifen angehoben wird. Ein Kraftspeicher, insbesondere eine Schraubenfeder, der sich zwischen dem Klemmstreifen und dem Grundkörper erstreckt, bewirkt, dass der Klemmstreifen wieder in seine Ausgangslage zurückgebracht wird, sobald zum Öffnen des Beschlags ein entgegengesetztes Schwenken des Exzenterhebels stattfindet.

Der Klemmstreifen selbst ist mit dem Bolzen nicht fest, sondern so verbunden, dass er zumindest in einem geringen Umfang geschwenkt werden kann. Wird beispielsweise unbeabsichtigt der Beschlag z.B. aufgrund einer Belastung durch das Ladegut in Fahrtrichtung entlang der Schiene verschoben, findet durch das Verdrehen, Verkeilen oder Verkanten des Klemmstreifens im Hinterschnitt der Schiene eine Hemmung statt, welche den Klemmstreifen gegenüber dem Bolzen etwas verschwenkt, so dass die Hemmung erhöht wird. In einem weiteren Ausführungsbeispiel der Erfindung ist vorgesehen, sowohl zwischen Grundkörper und Exzenterhebel als auch zwischen Grundkörper und Klemmstreifen ein Dämpfungselement, insbesondere einen Elastomerdämpfer, anzuordnen. Dieser gewährleistet außer den oben beschriebenen Vorteilen auch die Möglichkeit eines Toleranzausgleichs. Die Feder kann, muss aber nicht entfallen.

Des weiteren kann zur Vermeidung des Verschiebens des Beschlags an der Schiene entlang auch vorgesehen sein, dass der Grundkörper zur Schiene bzw. zum Profil hin eine elastische, insbesondere gummiartige Oberfläche aufweist, wie dies in der EP 1 880 900 gezeigt ist. Hierbei kann auch zusätzlich vorgesehen sein, dass der Klemmstreifen mit einem schräggestellten freien Ende ausgebildet ist, an dem entlang der untere Randstreifen des Profils der Schiene beim Anziehen des Klemmstreifens gleitet, so dass der ganze Beschlag gegen das Profil gezogen wird.

### Figurenbeschreibung

Weitere Vorteile, Merkmale und Einzelheiten ergeben sich aus der nachfolgenden Beschreibung bevorzugter Ausführungsbeispiele sowie anhand der Zeichnung; diese zeigt in
Figur 1 eine Seitenansicht einer erfindungsgemässen Vorrichtung zum Festlegen von Ladungsgegenständen in Öffnungslage eines Beschlags;
Figur 2 eine Seitenansicht des Beschlags gemäss Figur 1 in Schliesslage;
Figur 3 eine perspektivische Ansicht des Beschlags gemäss Figur 2;
Figur 4 eine Seitenansicht eines weiteren Ausführungsbeispiels einer erfindungsgemässen Vorrichtung zum Festlegen von Ladungsgegenständen in Öffnungslage eines Beschlags;
Figur 5 eine Seitenansicht des Beschlags gemäss Figur 4 in Schliesslage.

Eine erfindungsgemässe Vorrichtung zum Festlegen von Ladungsgegenständen besteht aus einer Schiene 1 und einem Beschlag 2. Die Schiene kann beispielsweise an den Seitenwänden, dem Boden oder der Decke eines beliebigen Fahrzeugaufbaus angeordnet werden und weist ein Profil 3 auf, an dem der Beschlag 2 festgelegt wird. Hierzu übergreift der Beschlag 2 mit einem oberen Profilstreifen 4 einen oberen Randstreifen 5 und mit einem unteren Klemmstreifen 6 einen unteren Randstreifen 7 des Profils 3.

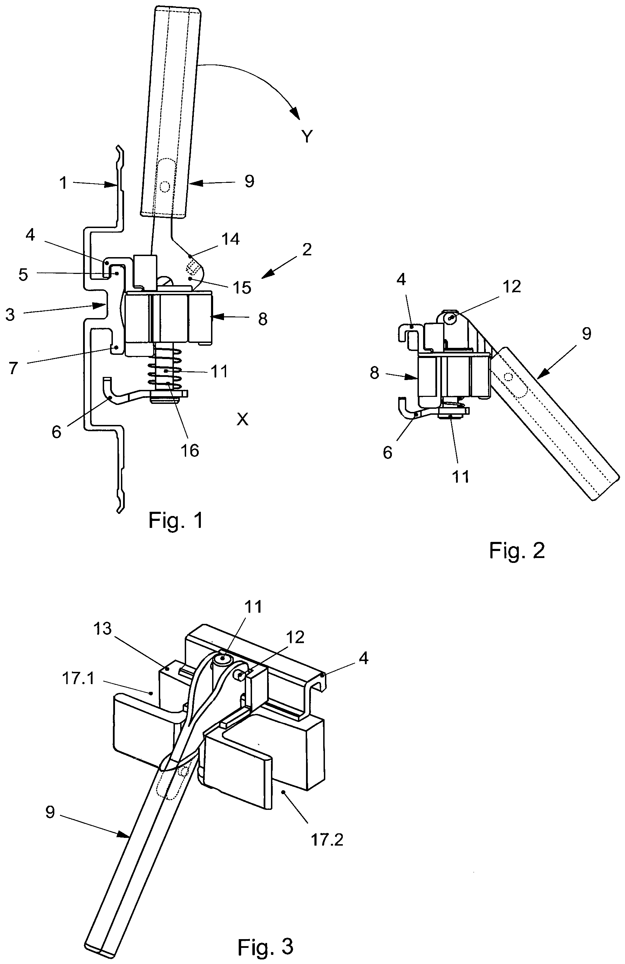

Der Profilstreifen 4 ist fest an einem Grundkörper 8 des Beschlags angeordnet, während der Klemmstreifen 6 in Richtung x gegen den Grundkörper 8 bzw. den Profilstreifen 4 bewegbar ist. Dies wird über einen Exzenterhebel 9 bewirkt. Der Exzenterhebel 9 besitzt eine gelenkige Verbindung 10 mit einem Bolzen 11. Die gelenkige Verbindung wird gemäss Figur 3 durch einen Schraube mit Mutter 12 gebildet. Dieser Schraube mit Mutter 12 durchsetzt eine Gabel 13, welche auch den Bolzen 11 umfasst.

Des weiteren ist an der Gabel 13 ein exzentrischer Bereich 14 ausgebildet, an dem der Schraube mit Mutter 12 ebenfalls exzentrisch gelagert ist. Beim Schwenken des Exzenterhebels 9 um die Schraube mit Mutter 12 läuft der exzentrische Bereich 14 eine Oberfläche 15 des Grundkörpers 8 ab, wodurch die Gabel 13 den Schraube mit Mutter 12 anhebt. Dies wird in Figur 2 angedeutet. Über die Schraube mit Mutter 12 wird auch der Bolzen 11 mitgenommen, so dass der Klemmstreifen 6 gegen den Grundkörper 8 angehoben wird, was wiederum gegen die Kraft einer Schraubenfeder 16 geschieht.

Die Funktionsweise der vorliegenden Erfindung ist folgende:
Mit dem Beschlag 2 soll ein beliebiger Gegenstand auf einer Ladefläche festgelegt werden. Hierzu ist der Beschlag 2 ebenfalls auf beliebige Art und Weise mit dem Gegenstand verbunden. Zum Beispiel sind hierfür vom Grundkörper 8 gemäss Figur 3 seitlich ausgeformt zwei Aufnahmerinnen 17.1 und 17.2 ausgebildet, welche Gegenstände oder Teile von festzulegenden Gegenständen aufnehmen.

Zuerst wird der Beschlag 2 mit dem Profilstreifen 4 auf den oberen Randstreifen 5 der Schiene 1 aufgesetzt. Der Grundkörper 8 liegt dabei an dem Profil 3 an.

Nunmehr wird der Exzenterhebel 9 in Richtung y nach unten geschwenkt, wobei der exzentrische Bereich 14 des Exzenterhebels 9 auf der Oberfläche 15 entlanggleitet. Damit wird der Schraube mit Mutter 12 und der Bolzen 11 in Richtung x angehoben, was bedeutet, dass der Klemmstreifen 6 hochgezogen wird und den unteren Randstreifen 7 hintergreift. Die Endlage hiervon ist in Figur 2 gezeigt.

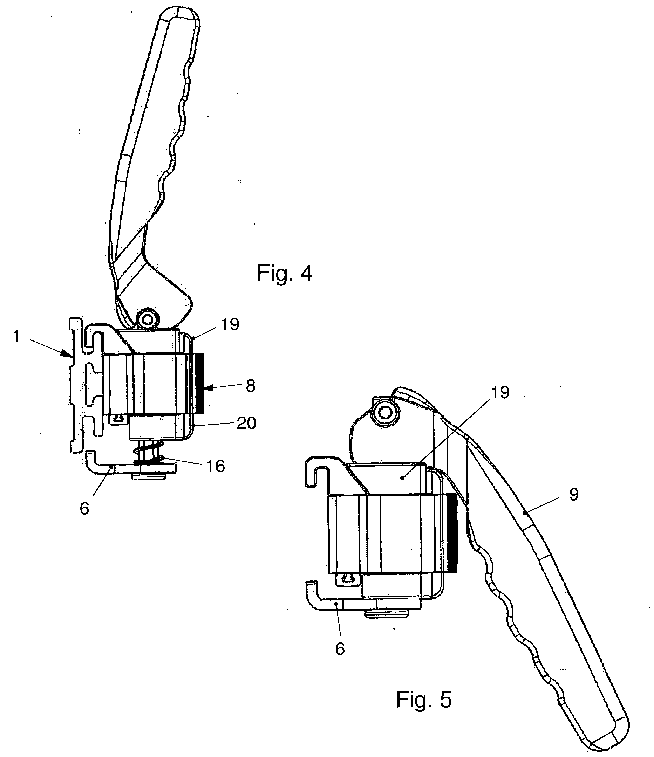

Der Klemmstreifen 6 ist zudem schwenkbar mit dem Bolzen 11 verbunden. Wird der Beschlag 2 versehentlich entlang der Schiene 1 verschoben, schwenkt der Klemmstreifen 6 gegen den unteren Randstreifen 7 und stellt sich einem Verschieben entgegen.
Das Ausführungsbeispiel einer weiteren erfindungsgemässen Vorrichtung zum Festlegen von Ladungsgegenständen gemäss den Figuren 4 und 5 unterscheidet sich von den eben beschriebenen Ausführungsbeispiel dadurch, dass beidseits des Grundkörpers 8 elastische Elemente 19 und 20 angeordnet sind. Beim Verbringen des Beschlags in Schliesslage gemäss Figur 5 stützt das elastische Element 19 den Exzenterhebel 9 und das elastische Element 20 den Klemmstreifen 6 ab. Dies bewirkt nicht nur eine Dämpfung des gesamten Beschlages sondern ermöglicht vor allem auch einen Toleranzausgleich beim Festlegen der Vorrichtung an der Schiene 1.

In Figur 4 ist noch zusätzlich die Schraubenfeder 16 vorgesehen.

**Bezugszeichenliste**

| | | | | | |
|---|---|---|---|---|---|
| 1 | Schiene | 34 | | 67 | |
| 2 | Beschlag | 35 | | 68 | |
| 3 | Profil | 36 | | 69 | |
| 4 | Profilstreifen | 37 | | 70 | |
| 5 | oberer Randstreifen | 38 | | 71 | |
| 6 | Klemmstreifen | 39 | | 72 | |
| 7 | unterer Randstreifen | 40 | | 73 | |
| 8 | Grundkörper | 41 | | 74 | |
| 9 | Exzenterhebel | 42 | | 75 | |
| 10 | Verbindung | 43 | | 76 | |
| 11 | Bolzen | 44 | | 77 | |
| 12 | Schraube mit Mutter | 45 | | 78 | |
| 13 | Gabel | 46 | | 79 | |
| 14 | exzentrischer Bereich | 47 | | | |
| 15 | Oberfläche | 48 | | | |
| 16 | Schraubenfeder | 49 | | | |
| 17 | Aufnahmerinne | 50 | | | |
| 18 | | 51 | | | |
| 19 | elastisches Element | 52 | | | |
| 20 | elastisches Element | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | x | Bewegungsrichtung |
| 30 | | 63 | | y | Schwenkrichtunq |
| 31 | | 64 | | | |
| 32 | | 65 | | | |
| 33 | | 66 | | | |

## Patentansprüche

1. Vorrichtung zum Festlegen von Ladungsgegenständen, insbesondere von Ladegütern auf Ladeflächen eines Lkw od. dgl., mittels einem Beschlag (2) an einer Schiene (1), wobei die Schiene (1) ein Profil (3) aufweist, welches von einer Halterung des Beschlags (2) zumindest teilweise umgreifbar ist, wobei
die Halterung aus einem Profilstreifen (4) und einem Klemmstreifen (6) besteht, wobei der Klemmstreifen (6) gegenüber dem Profilstreifen (4) bewegbar ist und wobei der Profilstreifen (4) an einem Grundkörper (8) des Beschlags (2) festgelegt ist,
**dadurch gekennzeichnet,**
**dass** sich der Klemmstreifen (6) gegenüber dem Grundkörper (8) über eine Schraubenfeder (16) abstützt.

2. Vorrichtung nach Anspruch 1, **dadurch gekennzeichnet, dass** der fixe Profilstreifen (4) auf das Profil (3) der Schiene (1) hängbar ist.

3. Vorrichtung nach Anspruch 1 oder 2, **dadurch gekennzeichnet, dass** der Profilstreifen (4) ein fixer Bestandteil des Beschlag (2) ist.

4. Vorrichtung nach wenigstens einem der vorhergehenden Ansprüche, **dadurch gekennzeichnet, dass** der Klemmstreifen (6) mit einem Exzenterhebel (9) verbunden ist.

5. Vorrichtung nach wenigstens einem der vorhergehenden Ansprüche, **dadurch gekennzeichnet, dass** der Klemmstreifen (6) an einem Bolzen (11) angeordnet ist.

6. Vorrichtung nach Anspruch 4 und 5, **dadurch gekennzeichnet, dass** der Bolzen (11) mit dem Exzenterhebel (9) verbunden ist.

7. Vorrichtung nach Anspruch 5 oder 6, **dadurch gekennzeichnet, dass** der Bolzen (11) den Grundkörper (8) durchsetzt und anderenends des Klemmstreifens (6) die Verbindung (10) mit dem Exzenterhebel (9) aufweist.

8. Vorrichtung nach einem der Ansprüche 5 bis 7, **dadurch gekennzeichnet, dass** die Schraubenfeder (16) den Bolzen (11) umfängt.

9. Vorrichtung nach einem der Ansprüche 1 oder 8, **dadurch gekennzeichnet, dass** zwischen dem Grundkörper (8) und dem Exzenterhebel (9) und/oder zwischen Grundkörper (8) und dem Klemmstreifens (6) ein elastisches Element (19,20) angeordnet ist.

10. Vorrichtung nach wenigstens einem der Ansprüche 5 bis 9, **dadurch gekennzeichnet, dass** der Klemmstreifen (6) an dem Bolzen (11) schwenkbar ist.

11. Vorrichtung nach wenigstens einem der Ansprüche 5 bis 10, **dadurch gekennzeichnet, dass** der Bolzen (11) mit dem Exzenterhebel (9) exzentrisch verbunden ist.

12. Vorrichtung nach wenigstens einem der Ansprüche 5 bis 11, **dadurch gekennzeichnet, dass** der Exzenterhebel (9) beim Schwenken mit einem exzentrischen Abschnitt (14) den Grundkörper (8) abrollt und dabei den Bolzen (11) und mit diesem den Klemmstreifen (6) anhebt.

13. Vorrichtung nach wenigstens einem der vorhergehenden Ansprüche, **dadurch gekennzeichnet, dass** der Grundkörper (8) zum Profil (3) eine elastische Oberfläche aufweist.

## Claims

1. Device for securing load objects, in particular load goods on loading surfaces of a truck or the like, by means of a fitting (2) on a rail (1), the rail (1) having a profile (3) which can be at least partially embraced by a holder of the fitting (2), wherein the holder comprises a profile strip (4) and a clamping strip (6), the clamping strip (6) being movable relative to the profile strip (4) and the profile strip (4) being fixed to a base body (8) of the fitting (2),
**characterized in that**
the clamping strip (6) is supported with respect to the base body (8) via a helical spring (16).

2. Device according to claim 1, **characterized in that** the fixed profile strip (4) can be suspended on the profile (3) of the rail (1).

3. Device according to claim 1 or 2, **characterized in that** the profile strip (4) is a fixed component of the fitting (2).

4. Device according to at least one of the preceding claims, **characterized in that** the clamping strip (6) is connected to an eccentric lever (9).

5. Device according to at least one of the preceding claims, **characterized in that** the clamping strip (6) is arranged on a bolt (11).

6. Device according to claims 4 and 5, **characterized in that** the bolt (11) is connected to the eccentric lever (9).

7. Device according to Claim 5 or 6, **characterized in that** the bolt (11) passes through the base body (8) and has the connection (10) with the eccentric lever (9) at the other end of the clamping strip (6).

8. Device according to any of claims 5 to 7, **characterized in that** the coil spring (16) surrounds the bolt (11).

9. Device according to one of claims 1 or 8, **characterized in that** an elastic element (19, 20) is arranged between the base body (8) and the eccentric lever (9) and/or between the base body (8) and the clamping strip (6).

10. Device according to at least one of claims 5 to 9, **characterized in that** the clamping strip (6) is pivotable on the bolt (11).

11. Device according to at least one of claims 5 to 10, **characterized in that** the bolt (11) is eccentrically connected to the eccentric lever (9).

12. Device according to at least one of claims 5 to 11, **characterized in that** the eccentric lever (9) rolls the base body (8) during pivoting with an eccentric section (14) and thereby raises the bolt (11) and with it the clamping strip (6).

13. Device according to at least one of the preceding claims, **characterized in that** the base body (8) has an elastic surface in relation to the profile (3).

## Revendications

1. Dispositif de fixation d'objets de chargement, en particulier de produits de chargement sur des surfaces de chargement d'un camion ou autre, au moyen d'une ferrure (2) sur un rail (1), dans lequel le rail (1) présente un profilé (3) autour duquel peut venir en prise au moins partiellement un support de la ferrure (2), dans lequel
le support est constitué d'une bande profilée (4) et d'une bande de serrage (6), où la bande de serrage (6) est déplaçable par rapport à la bande profilée (4) et où la bande profilée (4) est fixée à un corps de base (8) de la ferrure (2),
**caractérisé par le fait**
**que** la bande de serrage (6) s'appuie par rapport au corps de base (8) par l'intermédiaire d'un ressort hélicoïdal (16).

2. Dispositif selon la revendication 1, **caractérisé par le fait que** la bande profilée fixe (4) peut être suspendue du profilé (3) du rail (1).

3. Dispositif selon la revendication 1 ou 2, **caractérisé par le fait que** la bande profilée (4) est une partie fixe de la ferrure (2).

4. Dispositif selon au moins l'une des revendications précédentes, **caractérisé par le fait que** la bande de serrage (6) est connectée à un levier excentrique (9).

5. Dispositif selon au moins l'une des revendications précédentes, **caractérisé par le fait que** la bande de serrage (6) est disposée sur un boulon (11).

6. Dispositif selon la revendication 4 et 5, **caractérisé par le fait que** le boulon (11) est connecté au levier excentrique (9).

7. Dispositif selon la revendication 5 ou 6, **caractérisé par le fait que** le boulon (11) traverse le corps de base (8) et présente, à l'autre extrémité de la bande de serrage (6), la connexion (10) au levier excentrique (9).

8. Dispositif selon l'une des revendications 5 à 7, **caractérisé par le fait que** le ressort hélicoïdal (16) entoure le boulon (11).

9. Dispositif selon l'une des revendications 1 ou 8, **caractérisé par le fait qu'**entre le corps de base (8) et le levier excentrique (9) et/ou entre le corps de base (8) et la bande de serrage (6) est disposé un élément élastique (19, 20).

10. Dispositif selon au moins l'une des revendications 5 à 9, **caractérisé par le fait que** la bande de serrage (6) peut pivoter sur le boulon (11).

11. Dispositif selon au moins l'une des revendications 5 à 10, **caractérisé par le fait que** le boulon (11) est connecté de manière excentrique au levier excentrique (9).

12. Dispositif selon au moins l'une des revendications 5 à 11, **caractérisé par le fait que** le levier excentrique (9) déroule, lors du pivotement, le corps de base (8) par une partie excentrique (14) et soulève ainsi le boulon (11) et, avec ce dernier, la bande de serrage (6).

13. Dispositif selon au moins l'une des revendications précédentes, **caractérisé par le fait que** le corps de base (8) présente, du côté du profilé (3), une surface élastique.
